# EUROPÄISCHE PATENTSCHRIFT

(11) **EP 3 771 154 B1**
(45) Veröffentlichungstag und Bekanntmachung des Hinweises auf die Patenterteilung: **29.05.2024**
(21) Anmeldenummer: 20183597.2
(22) Anmeldetag: 02.07.2020
(51) Int. Cl.: H04L 41/0806, H04L 41/0823, H04L 43/0805, H04L 41/084, H04L 41/08, H04L 41/0894

(54) **VERFAHREN ZUR ÜBERTRAGUNG VON DATEN ZWISCHEN EINEM FAHRZEUG UND EINEM VERKEHRSSICHERUNGSSYSTEM**
METHOD FOR TRANSFERRING DATA BETWEEN A VEHICLE AND A TRANSPORT SAFETY SYSTEM
PROCÉDÉ DE TRANSMISSION DES DONNÉES ENTRE UN VÉHICULE ET UN SYSTÈME DE SÉCURITÉ DE CIRCULATION

(30) Priorität: 24.07.2019 AT 506672019
(43) Veröffentlichungstag der Anmeldung: 27.01.2021
(73) Patentinhaber: Frequentis AG, 1100 Wien (AT)
(72) Erfinder: PRINZ, Richard, 1150 Wien (AT); ANSARI, Saadan, 1170 Wien (AT)
(74) Vertreter: Wildhack & Jellinek Patentanwälte

(56) Entgegenhaltungen:
- EP-A2- 1 618 748
- EP-B1- 1 618 748
- WO-A2-2005/018261
- DE-B3- 10 338 487

## Beschreibung

Die Erfindung betrifft ein Verfahren zur Übertragung von Daten zwischen einem Fahrzeug und einem Verkehrssicherungssystem gemäß Patentanspruch 1, sowie ein Datenübertragungssystem gemäß Patentanspruch 3.

Aus der EP 1 618 748 A2 sind Verfahren und Vorrichtungen bekannt, die es ermöglichen, multiple Kommunikationskanäle verschiedener Übertragungs- und/oder Zugriffstechnologien innerhalb einer Zelle eines kabellosen Kommunikationssystems parallel zu nutzen. Dabei unterstützen mobile Knoten multiple Technologien und können einen Wechsel von einem Kanal zu einem anderen Kanal durchführen, der eine bessere Qualität aufweist. Weiters halten Mobilgeräte dabei zumindest zwei Sets von Kanalqualitätsinformationen bereit, wählen den besseren Kanal aus und kommunizieren diese Auswahl an die Basisstation oder übermitteln Kanalqualitätsinformationen mehrer Kanäle an die Basisstation und die Basisstation wählt den Kanal aus.

Aus dem Stand der Technik ist es bekannt, die Datenkommunikation zwischen einem Fahrzeug, z.B. einem Luftfahrzeug, und einem Verkehrssicherungssystem, z.B. einem am Boden befindlichen Flugsicherungssystem, z.B. zum Zweck der Kommunikation, Navigation oder Überwachung über Router durchzuführen. Auf einem derartigen Router sind Routingtabellen hinterlegt, die Angaben dazu enthalten, wie Datenpakete aufgrund deren IP-Adresse beispielsweise über verschiedene Netzwerke weitergeleitet werden sollen. Die Pfade für die Weiterleitung der Datenpakete sind in derartigen Routingtabellen jedoch meist fix vorgegeben und können nicht, beispielsweise je nach Verfügbarkeit oder Übertragungsqualität von einzelnen Übertragungskanälen, angepasst werden.

Zwar sind in Standard-Netzwerken wie etwa dem Internet Routing-Protokolle wie z.B. BGP4, RIP oder OSPF verfügbar, die die Routingtabellen eines Routers je nach Verfügbarkeit von Kommunikationsverbindungen ändern können. Im Falle von Datenkommunikation zwischen einem Fahrzeug und einem Verkehrssicherungssystem sind derartige Routing-Protokolle jedoch nicht einsetzbar, da diese einerseits langsam auf Veränderungen reagieren, was im Falle von Datenkommunikation im Bereich der z.B. Flugsicherung ungeeignet ist und andererseits große Datenmengen zum Austausch von Routing-Informationen zwischen Routern übertragen werden müssen, was z.B. bei Flugzeugen mit Kommunikationskanälen mit begrenzter Bandbreite ebenfalls ungeeignet ist.

Aufgabe der Erfindung ist es daher, diesbezüglich Abhilfe zu schaffen und ein Verfahren zur Übertragung von Daten zwischen einem Fahrzeug und einem Verkehrssicherungssystem bereitzustellen, das eine rasche Anpassung der Übertragungswege je nach z.B. Verfügbarkeit oder Übertragungsqualität von einzelnen Übertragungskanälen ermöglicht, ohne dass dazu große Datenmengen zum Austausch von Routing-Informationen übertragen werden müssen.

Die Erfindung löst diese Aufgabe bei einem Verfahren zur Übertragung von Daten zwischen einem Fahrzeug, beispielsweise einem Luftfahrzeug oder Wasserfahrzeug, und einem Verkehrssicherungssystem, beispielsweise einem am Boden befindlichen Flugsicherungssystem oder einem Schifffahrtssicherungssystem, mit den kennzeichnenden Merkmalen von Patentanspruch 1. Dabei ist vorgesehen,
- dass eine Anzahl von möglichen Übertragungskanälen zur Übertragung von Daten zwischen einem Fahrzeug und dem Verkehrssicherungssystem zur Verfügung stehen,
- dass im Fahrzeug Datenpakete für die Übertragung an das Verkehrssicherungssystem vorgegeben werden,
- dass, insbesondere laufend und/oder zu einer Vielzahl von Zeitpunkten, die Übertragungsqualität der einzelnen Übertragungskanäle gemessen wird, und
- dass aus der Art der zu übermittelnden Daten und den ermittelten Übertragungsqualitäten, sowie gegebenenfalls weiteren Vorgaben gemäß einem vorgegebenen Regelwerk, eine Übertragungskonfiguration aus einer Mehrzahl von vorab vorgegebenen Übertragungskonfigurationen ausgewählt wird.

Erfindungsgemäß ist dabei vorgesehen,
- dass die Übertragungskonfiguration für einzelne einem Dienst zugeordnete Datenpakete, gegebenenfalls abhängig vom Inhalt des jeweiligen Datenpakets, bestimmte Übertragungskanäle vorgibt,
- dass den Datenpaketen eine die Übertragungskonfiguration kennzeichnende Kennung hinzugefügt wird, und
- dass die im Fahrzeug für die Übertragung vorgegebenen Datenpakete entsprechend der Übertragungskonfiguration gemeinsam mit der Kennung an das Verkehrssicherungssystem übertragen werden,
- zur anschließenden Datenübertragung zwischen dem Verkehrssicherungssystem und dem Fahrzeug, Datenpakete vorgegeben werden,
- dass für jede der Übertragungskonfigurationen im Fahrzeug jeweils eine weitere Übertragungskonfiguration, insbesondere am Boden, zur Verfügung steht, die eine Rückübermittlung über denselben Übertragungskanal ermöglicht,
- dass aus dem vom Fahrzeug übermittelten Datenpaket die Kennung identifiziert wird und die der Kennung zugeordnete weitere Übertragungskonfiguration gewählt wird, und
- dass die vorgegebenen Datenpakete entsprechend der gewählten weiteren Übertragungskonfiguration vom Verkehrssicherungssystem an das Fahrzeug übertragen werden.

Durch diese Ausgestaltung eines erfindungsgemäßen Verfahrens ist vorteilhafterweise sichergestellt, dass durch die Auswahl einer entsprechenden Übertragungskonfiguration einerseits die aktuell zur Verfügung stehenden Übertragungskanäle, die Übertragungsqualität der Übertragungskanäle, die Art der zu übertragenden Daten, aber auch gegebenenfalls weitere, beispielsweise benutzerspezifische, Vorgaben für die Datenübertragung berücksichtigt werden können. Die zu übermittelnden Datenpakete können somit in jeder Verkehrssituation über den optimalen Übertragungskanal vom Fahrzeug zum Verkehrssicherungssystem übertragen werden.

Dies bedeutet, dass, sollte ein Übertragungskanal während der Übertragung nicht mehr zur Verfügung stehen oder schlechte Übertragungsqualität aufweisen, einfach eine andere Übertragungskonfiguration ausgewählt und die Datenübertragung über diesen Übertragungskanal weitergeführt werden kann, wobei die Adresse der Kommunikationspartner unverändert bleibt. Für die Weiterleitung der Datenpakete zwischen dem Fahrzeug und dem Verkehrssicherungssystem werden Prinzipien aus dem Software Defined Networking angewandt. Dadurch, dass die Kennung, die die Übertragungskonfiguration kennzeichnet, vom Fahrzeug an das Verkehrssicherungssystem übertragen wird, stehen auch beim Verkehrssicherungssystem Informationen zur Verfügung, die angeben, welche Übertragungskonfiguration zur Übertragung der Datenpakete vom Fahrzeug genutzt wurde.

Weiters ist durch diese Ausgestaltung eines erfindungsgemäßen Verfahrens eine besonders zuverlässige Datenübertragung zwischen dem Verkehrssicherungssystem und dem Fahrzeug sichergestellt.

Eine besonders vorteilhafte Übertragung der Kennung kann erfolgen, indem die Kennung piggyback, d.h. "huckepack" im bestehenden Datenverkehr vom Fahrzeug an das Verkehrssicherungssystem übermittelt wird, beispielsweise im Flow-Label-Feld eines IPv6 Datenpakets. Auf diese Weise kann die benötigte Bandbreite und die Größe der zu übertragenden Datenpakete reduziert werden.

Um das Verkehrssicherungssystem über den Zustand des Fahrzeugs bzw. über die aktuell zur verwendende Übertragungskonfiguration zu informieren, kann vorgesehen sein, dass zur Aktualisierung der vom Verkehrssicherungssystem für eine Datenübertragung an das Fahrzeug zu verwendenden weiteren Übertragungskonfiguration, insbesondere wenn über einen längeren Zeitraum kein Datenpaket vom Fahrzeug an das Verkehrssicherungssystem übermittelt wurde, die kennzeichnende Kennung enthaltende Dummy-Datenpakete vom Fahrzeug an das Verkehrssicherungssystem übermittelt werden.

Aufgabe der Erfindung ist es weiters, ein Datenübertragungssystem zur Übertragung von Daten zur Verfügung zu stellen, das eine erfindungsgemäße Datenübertragung zwischen einem Fahrzeug, insbesondere einem Luftfahrzeug oder Wasserfahrzeug, und einem Verkehrssicherungssystem, insbesondere einem am Boden befindlichen Flugsicherungssystem oder einem Schifffahrtssicherungssystem, ermöglicht.

Dabei ist vorgesehen, dass das Datenübertragungssystem Folgendes umfasst:
a) eine Sende- und Empfangseinrichtung zur Verwendung in einem Fahrzeug, insbesondere einem Luftfahrzeug oder Wasserfahrzeug, umfassend
   - eine Anzahl Übertragungseinheiten für die Übertragung von Daten über Übertragungskanäle zwischen dem Fahrzeug und einem Verkehrssicherungssystem, insbesondere einem am Boden befindlichen Flugsicherungssystem oder Schifffahrtssicherungssystem,
   - zumindest eine Datenverarbeitungsanlage zur Erstellung von Datenpaketen für die Übertragung an das Verkehrssicherungssystem sowie zur Verarbeitung von an das Fahrzeug übertragenen Datenpaketen,
   - eine an die Übertragungskanäle angekoppelte und mit der zumindest einen Datenverarbeitungsanlage verbundene On-Board-Multilink-Einheit, die dazu ausgebildet ist, zu übertragende Datenpakete an die Übertragungskanäle weiterzuleiten und/oder empfangene Datenpakete von den Übertragungskanälen zu erhalten, und
   - eine mit der On-Board-Multilink-Einheit verbundene, und gegebenenfalls an die Übertragungskanäle angekoppelte, Multilink-Management-Einheit umfassend einen Speicher,
   wobei im Speicher der Multilink-Management-Einheit ein vorgegebenes Regelwerk mit einer Mehrzahl an Übertragungskonfigurationen zur Weiterleitung von zu übertragenden Datenpaketen hinterlegt ist, und wobei die Multilink-Management-Einheit dazu ausgebildet ist
   - die Übertragungsqualität, die für die Datenübertragung in den einzelnen Übertragungskanälen zur Verfügung steht, insbesondere laufend und/oder zu einer Vielzahl von Zeitpunkten, zu messen, und
   - aus der Art der zu übermittelnden Daten und den ermittelten Übertragungsqualitäten, sowie gegebenenfalls weiteren Vorgaben gemäß dem vorgegebenen Regelwerk, eine Übertragungskonfiguration auszuwählen,
   und
b) eine stationäre Sende- und Empfangseinrichtung zur Verwendung in einem Verkehrssicherungssystem umfassend
   - eine Anzahl von Übertragungseinheiten zur Übertragung von Daten in den Übertragungskanälen zwischen dem Verkehrssicherungssystem und einem Fahrzeug, insbesondere Luftfahrzeug oder Wasserfahrzeug,
   - zumindest eine Datenverarbeitungsanlage zur Erstellung von weiteren Datenpaketen für die Übertragung an das Fahrzeug, insbesondere Luftfahrzeug oder Wasserfahrzeug, sowie zur Verarbeitung von an das Verkehrssicherungssystem übertragenen Datenpaketen, und
   - eine an die Übertragungskanäle angekoppelte und mit der zumindest einen Datenverarbeitungsanlage verbundene Boden-Multilink-Einheit, die dazu ausgebildet ist, zu übertragende weitere Datenpakete über die Übertragungskanäle weiterzuleiten und/oder empfangene Datenpakete über die Übertragungskanäle zu erhalten,

Erfindungsgemäß ist dabei vorgesehen,
- dass die Multilink-Management-Einheit dazu ausgebildet ist
   - entsprechend der jeweils ausgewählten Übertragungskonfiguration für einzelne einem Dienst zugeordnete Datenpakete, gegebenenfalls abhängig vom Inhalt des jeweiligen Datenpakets, bestimmte Übertragungskanäle vorzugeben und den Datenpaketen eine die Übertragungskonfiguration kennzeichnende Kennung hinzuzufügen und
   - die On-Board-Multilink-Einheit zur Übertragung der Datenpakete an das Flugsicherungssystem gemeinsam mit der Kennung über die entsprechend der Übertragungskonfiguration vorgegebenen Übertragungskanäle anzusteuern und
- dass die stationäre Sende- und Empfangseinrichtung eine mit der Boden-Multilink-Einheit verbundene, und gegebenenfalls an die Übertragungskanäle angekoppelte, stationäre Multilink-Management-Einheit umfassend einen weiteren Speicher umfasst, wobei im weiteren Speicher ein weiteres vorgegebenes Regelwerk mit einer Mehrzahl an weiteren Übertragungskonfigurationen zur Weiterleitung von zu übertragenden weiteren Datenpaketen hinterlegt ist, wobei für jede der Übertragungskonfigurationen der Sende- und Empfangseinrichtung jeweils eine weitere Übertragungskonfiguration im weiteren Speicher zur Verfügung steht, die eine Rückübermittlung über denselben Übertragungskanal ermöglicht, und
wobei die stationäre Multilink-Management-Einheit dazu ausgebildet ist
- aus einem an das Verkehrssicherungssystem übermittelten Datenpaket die Kennung zu identifizierten und die der Kennung zugeordnete weitere Übertragungskonfiguration auszuwählen,
- entsprechend der jeweils ausgewählten weiteren Übertragungskonfiguration bestimmte Übertragungskanäle vorzugeben und
- die Boden-Multilink-Einheit zur Übertragung der weiteren Datenpakete an das Fahrzeug über die entsprechend der weiteren Übertragungskonfiguration vorgegebenen Übertragungskanäle anzusteuern.

Eine besonders vorteilhafte Übertragung der Kennung kann erfolgen, wenn die Multilink-Management-Einheit dazu ausgebildet ist die kennzeichnende Kennung den im Fahrzeug für die Übertragung an das Verkehrssicherungssystem vorgegebenen Datenpaketen (ATS, AOC) als Bestandteil, insbesondere piggyback, hinzuzufügen. Somit kann die Kennung beispielsweise im Flow-Label-Feld eines IPv6 Datenpakets übermittelt werden. Auf diese Weise kann die benötigte Bandbreite und die Größe der zu übertragenden Datenpakete vorteilhaft reduziert werden.

Um stets eine aktuelle, für eine Datenübertragung an das Fahrzeug zur verwendende Übertragungskonfiguration zur Verfügung zu stellen, kann vorgesehen sein, dass die Multilink-Management-Einheit dazu ausgebildet ist, zur Aktualisierung einer für eine Datenübertragung an das Fahrzeug zu verwendenden weiteren Übertragungskonfiguration, insbesondere wenn über einen längeren Zeitraum kein Datenpaket mehr vom Fahrzeug übertragen wurde, die kennzeichnende Kennung enthaltende Dummy-Datenpakete zu erstellen und die On-Board-Multilink-Einheit anzusteuern, diese Dummy-Datenpakete zu übermitteln.

Weitere Vorteile und Ausgestaltungen der Erfindung ergeben sich aus der Beschreibung und den beiliegenden Zeichnungen.

Besonders vorteilhafte, aber nicht einschränkend zu verstehende Ausführungsbeispiele der Erfindung werden im Folgenden anhand der beiliegenden Zeichnungen schematisch dargestellt und unter Bezugnahme auf die Zeichnungen beispielhaft beschrieben.

Im Folgenden zeigen schematisch:
Fig. 1 ein Luftfahrzeug mit einer On-Board-Multilink-Einheit zur Durchführung eines erfindungsgemäßen Verfahrens zur Übertragung von Daten,
Fig. 2a bis 2d Ausführungsbeispiele von Übertragungskonfigurationen,
Fig. 3 ein Ausführungsbeispiel einer erfindungsgemäßen Übertragung von Daten zwischen dem Luftfahrzeug aus Fig. 1 und einem am Boden befindlichen Flugsicherungssystem.

Im Folgenden werden ein erfindungsgemäßes Verfahren zur Datenübertragung zwischen einem Fahrzeug und einem Verkehrssicherungssystem sowie eine erfindungsgemäße Sende- und Empfangseinrichtung 100 und eine stationäre Sende- und Empfangseinrichtung 200 eines erfindungsgemäßen Datenübertragungssystems beispielhaft anhand eines Ausführungsbeispiels für Datenübertragung in der Luftfahrt besch rieben.

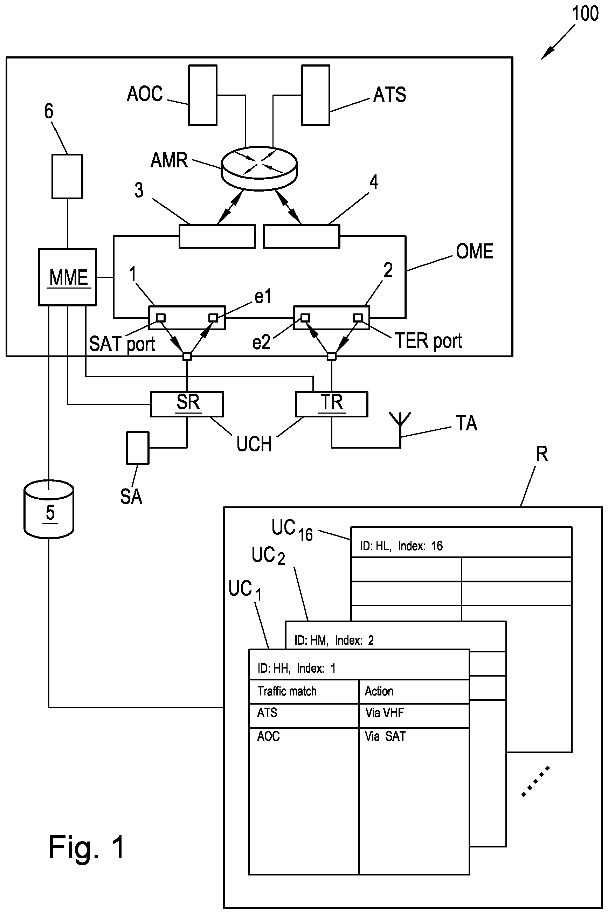

Fig. 1 zeigt eine schematische Darstellung eines Luftfahrzeugs, das mit einer fahrzeugseitigen Sende- und Empfangseinrichtung 100 zur Durchführung eines erfindungsgemäßen Verfahrens zur Datenübertragung umfassend eine On-Board-Multilink-Einheit OME und eine Multilink-Management-Einheit MME ausgestattet ist. Das Luftfahrzeugs verfügt weiters über Übertragungseinheiten für die Übertragung von Daten über zwei Übertragungskanäle UCH, bei denen es sich im gezeigten Ausführungsbeispiel um einen Satellitenfunkkanal SR und einen terrestrischen Funkkanal TR handelt. Die Möglichkeit zur Datenübertragung über den Satellitenfunkkanal SR ist in Fig. 1 schematisch durch eine Satellitenfunkantenne SA bzw. für den terrestrischen Funkkanal TR durch eine terrestrische Funkantenne TA dargestellt.

Die On-Board-Multilink-Einheit OME umfasst im gezeigten Ausführungsbeispiel in Fig. 1 eine erste Schnittstelle 1 für Satelliten-Datenkommunikation und eine zweite Schnittstelle 2 für terrestrische Datenkommunikation. Die erste Schnittstelle 1 für Satelliten-Datenkommunikation weist einen Satellitenkommunikationseingang e₁ sowie einen Satellitenkommunikationsausgang SATₚₒᵣₜ auf. Die zweite Schnittstelle 2 für terrestrische Datenkommunikation weist einen terrestrischen Kommunikationseingang e₂ und einen terrestrischen Kommunikationsausgang TERₚₒᵣₜ auf. Die Richtung, in der zu übermittelnde Datenpakete übermittelt werden, ist in Fig. 1 durch Pfeile angegeben.

Die On-Board-Multilink-Einheit OME umfasst in Fig. 1 weiters eine dritte Schnittstelle 3 zur Weiterleitung von Datenpaketen, die über den Satellitenfunkkanal SR empfangen wurden, an einen mobilen Flugzeugrouter AMR des Luftfahrzeugs. Die On-Board-Multilink-Einheit OME umfasst in Fig. 1 weiters eine vierte Schnittstelle 4, über die über den terrestrischen Funkkanal TR empfangene Datenpakete an den mobilen Flugzeugrouter AMR weitergeleitet werden. Datenpakete, die beispielsweise Flugfernmeldungen ATS oder operative Nachrichten AOC betreffen, werden an Board des Luftfahrzeugs beispielsweise von zwei verschiedenen Datenverarbeitungsanlagen erstellt und über den mobilen Flugzeugrouter AMR des Luftfahrzeugs an die dritte Schnittstelle 3 und die vierte Schnittstelle 4 übermittelt. Über die dritte Schnittstelle 3 und die vierte Schnittstelle 4 können derartige Datenpakete jeweils an die erste Schnittstelle 1 für Satelliten-Datenkommunikation oder die zweite Schnittstelle 2 für terrestrische Datenkommunikation weitergeleitet werden.

Die On-Board-Multilink-Einheit OME ist im Ausführungsbeispiel in Fig. 1 mit der Multilink-Management-Einheit MME verbunden, die mit dem Satellitenfunkkanal SR und dem terrestrischen Funkkanal TR, einem Speicher 5 sowie dem Instrumentenpaneel 6 im Cockpit des Luftfahrzeugs verbunden ist. Dadurch, dass die Multilink-Management-Einheit MME mit dem Instrumentenpaneel 6 verbunden ist, ist es beispielsweise dem Piloten des Luftfahrzeugs möglich, Eingaben vorzunehmen und an die Multilink-Management-Einheit MME zu übermitteln.

Im Speicher 5 der On-Board-Multilink-Einheit OME ist ein Regelwerk R umfassend eine Vielzahl vorab vorgegebener Übertragungskonfigurationen UC hinterlegt. Die einzelnen Übertragungskonfigurationen UC geben dabei für einzelne, einem Dienst zur Übertragung von Daten zugeordnete, Datenpakete bestimmte Übertragungskanäle UCH vor. Die einzelnen Übertragungskonfigurationen UC sind dabei durch eine kennzeichnende Kennung, z.B. einen Index charakterisiert. In Fig. 1 ist diese kennzeichnende Kennung als Indexnummer 1 bis 16 angegeben.

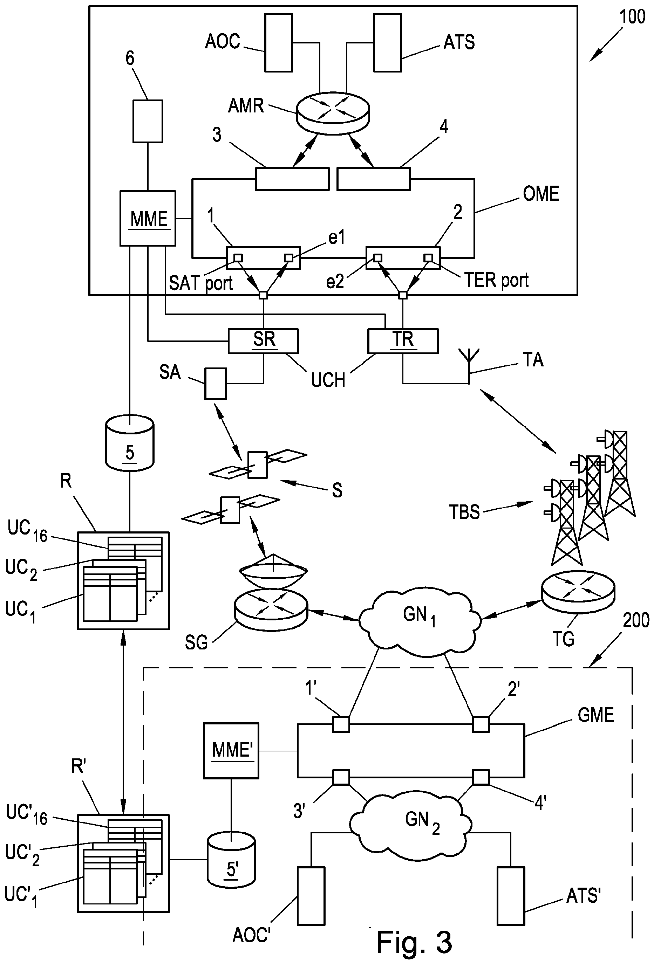

Die Multilink-Management-Einheit MME ist weiters mit den Schnittstellen 1, ..., 4 verbunden. Die Übertragungsqualität der einzelnen Übertragungskanäle UCH des Luftfahrzeugs wird laufend gemessen und an die Multilink-Management-Einheit MME übermittelt. Dazu kann, wie in Fig. 1 und Fig. 3, die Multilink-Management-Einheit MME direkt an die Übertragungskanäle UCH angekoppelt sein. Alternativ dazu kann die Verbindung mit den Übertragungskanälen UCH auch über die On-Board-Multilink-Einheit OME hergestellt werden.

Im Ausführungsbeispiel in Fig. 1 kann die Übertragungsqualität jedes Übertragungskanals UCH vier Zustände annehmen: gute Übertragungsqualität H, mittlere Übertragungsqualität M, schlechte Übertragungsqualität L, sowie keine Übertragung möglich U. Somit ergeben sich aus den vier möglichen Übertragungsqualitäten H, M, L, U des terrestrischen Funkkanals TR und den vier möglichen Übertragungsqualitäten H, M, L, U des Satellitenfunkkanals SR insgesamt 16 mögliche Konstellationen HH, HU, UH, LH, ..., für die jeweils eine Übertragungskonfigurationen UC hinterlegt ist. In Fig. 1 bis Fig. 3 gibt der erste Buchstabe hier jeweils die Übertragungsqualität des terrestrischen Funkkanals TR und der zweite Buchstabe die Übertragungsqualität des Satellitenfunkkanals SR an.

Wie bereits zuvor erwähnt, enthält jede Übertragungskonfiguration UC Regeln, wie Datenpakete, die einem Dienst zugeordnet sind, weitergeleitet werden sollen. Diese Regeln können beispielsweise anhand der Quell- und/oder Zieladressen der Datenpakete, der TCB- und/oder UTB-Portnummern oder anderer Kriterien, beispielsweise abhängig vom Inhalt des jeweiligen Datenpakets, festgelegt sein.

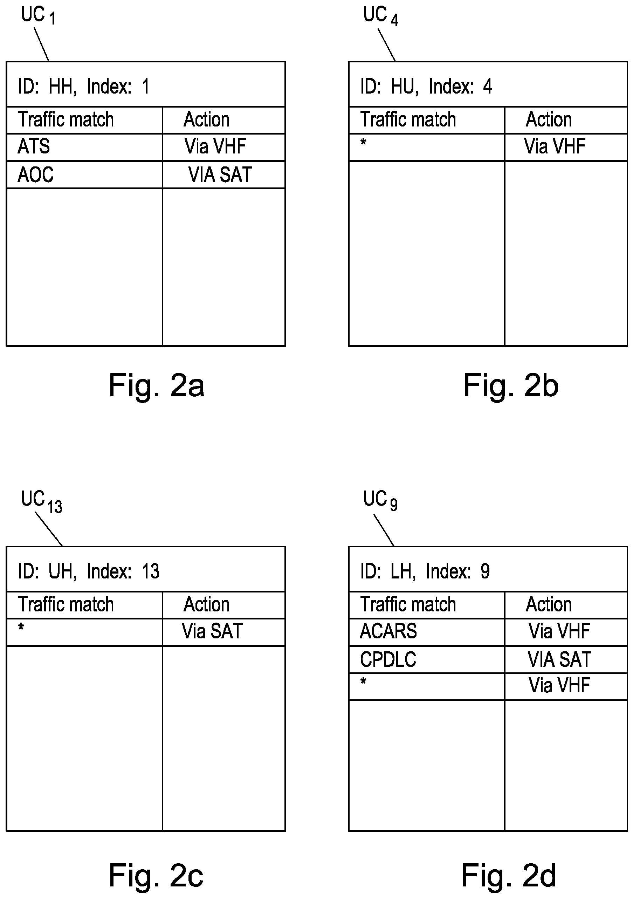

Die Fig. 2a bis 2d zeigen Beispiele derartiger Übertragungskonfigurationen UC. In Fig. 2a ist eine erste Übertragungskonfiguration UC₁ für eine Konstellation HH, d.h. gute Übertragungsqualität H sowohl des Satelliten- als auch des terrestrischen Funkkanals, mit der kennzeichnenden Kennung bzw. Indexnummer "1" dargestellt. Die erste Übertragungskonfiguration UC₁ regelt, dass Datenpakete ATS, die z.B. Flugfernmeldungen betreffen, über den terrestrischen Funkkanal TR über Ultrakurzwelle VHF übertragen werden. Datenpakete AOC, die die operative Kontrolle des Luftfahrzeugs betreffen, werden über den Satellitenfunkkanal SR übertragen, was durch den Hinweis "SAT" gekennzeichnet ist.

In Fig. 2b ist ein weiteres Ausführungsbeispiel einer Übertragungskonfiguration UC₄ mit der kennzeichnenden Kennung "4" dargestellt. In Fig. 2b ist ersichtlich, dass diese Übertragungskonfiguration UC₄ für eine Konstellation HU zum Einsatz kommt, wenn der terrestrische Funkkanal TR gute Übertragungsqualität H aufweist und über den Satellitenfunkkanal SR keine Übertragung U möglich ist. In diesem Fall werden alle zu übertragenden Datenpakete über Ultrakurzwelle, d.h. den terrestrischen Funkkanal TR über Ultrakurzwelle VHF, übermittelt.

Fig. 2c zeigt ein weiteres Ausführungsbeispiel einer Übertragungskonfiguration UC₁₃ mit der kennzeichnenden Kennung "13". Die Übertragungskonfiguration UC₁₃ kommt für eine Konstellation UH zum Einsatz, wenn über den terrestrischen Funkkanal TR keine Datenübertragung U möglich ist, der Satellitenfunkkanal SR jedoch gute Übertragungsqualität H aufweist. In diesem Fall werden alle zu übertragenden Datenpakete über den Satellitenfunkkanal SR übermittelt, was durch den Hinweis "SAT" gekennzeichnet ist.

Fig. 2d zeigt ein weiteres Ausführungsbeispiel einer Übertragungskonfiguration UC₉ mit der kennzeichnenden Kennung "9", die für eine Konstellation LH zum Einsatz kommt, d.h. sollte die Übertragungsqualität des terrestrischen Funkkanals TR L, also schlecht, sein und die Übertragungsqualität des Satellitenfunkkanals SR H, also gut, sein. In diesem Fall werden Nachrichten z.B. kurze Datentelegramme mit einer Datenrate von 2,4 kbps, die mittels ACARS zu übermitteln wären, über Ultrakurzwelle, d.h. den terrestrischen Funkkanal TR über Ultrakurzwelle VHF, übermittelt. Bei ACARS handelt es sich um das Aircraft Communications Addressing and Reporting System, ein digitales Datenfunksystem zur Übermittlung von Nachrichten zwischen Luftfahrzeugen 100 und einem Flugsicherungssystem 200, wie dies unter https://de.wikipedia.org/wiki/ACARS, zuletzt aufgerufen am 1. 7. 2019 beschrieben ist.

CPDLC, d.h. Controller Pilot Data Link Communications bis max 20 kbps, also Sprachkommunikation zwischen einem Fluglotsen und einem Piloten, beschrieben unter z.B. https://en.wikipedia.org/wiki/Controller%E2%80%93pilot_data_link_communications, zuletzt aufgerufen am 1. 7. 2019, werden in diesem Fall, wie in Fig. 2 ersichtlich ist, über den Satellitenfunkkanal SR übermittelt, was durch den Hinweis "SAT" gekennzeichnet ist. Alle anderen Datenübertragungen werden bei Verwendung der Übertragungskonfiguration UC₉ über Ultrakurzwelle, d.h. den terrestrischen Funkkanal TR über Ultrakurzwelle VHF, durchgeführt.

Die Auswahl der zu verwendenden Übertragungskonfiguration UC wird von der Multilink-Management-Einheit MME bei jeder Zustandsänderung der Übertragungsqualität eines Übertragungskanals UCH des Luftfahrzeugs oder gegebenenfalls beispielsweise von einem Piloten des Luftfahrzeugs über eine Eingabe am Instrumentenpaneel 6 manuell ausgelöst.

Wie bereits zuvor erwähnt, fließen jedoch nicht nur die Übertragungsqualität in die Entscheidung, welche Übertragungskonfiguration UC für an ein Verkehrssicherungssystem zu übertragende Datenpakete zum Einsatz kommt. Auch der Inhalt der Datenpakete, also ob diese beispielsweise Datenpakete ATC, die im Ausführungsbeispiel den operativen Betrieb des Luftfahrzeugs 100 betreffen oder Datenpakete ATS sind, die Flugfernmeldungen betreffen, oder auch beispielsweise einer besonderen Geheimhaltung unterliegen. Weiters können Präferenzen der Airline vom Piloten über das Instrumentenpaneel 6 eingegeben werden und in die Auswahl der Übertragungskonfiguration UC einfließen.

Die Multilink-Management-Einheit MME konfiguriert die On-Board-Multilink-Einheit OME anschließend entsprechend der gewählten Übertragungskonfiguration UC, was bedeutet, dass eine Übertragung der einem entsprechenden Dienst zugeordneten Datenpakete an ein Flugssicherungssystem je nach Übertragungskonfiguration UC über die erste Schnittstelle 1 für Satelliten-Datenkommunikation und den Satellitenfunkkanal SR oder die zweite Schnittstelle 2 und den terrestrischen Funkkanal TR erfolgt.

Anhand von Fig. 3 wird nun ein erfindungsgemäßes Verfahren zur Übertragung von Daten zwischen einem, mit einer fahrzeugseitigen Sende- und Empfangseinrichtung 100 ausgestatteten, Luftfahrzeug und einem am Boden befindlichen Flugsicherungssystem mit einer stationären Sende- und Empfangseinrichtung 200 beispielhaft beschrieben. Die Ausgestaltung der On-Board-Multilink-Einheit OME sowie der Multilink-Management-Einheit MME des Luftfahrzeugs sind im Detail in Fig. 1 dargestellt und zuvor im Zusammenhang mit Fig. 1 bereits im Detail beschrieben worden. Beispiele für die im Speicher 5 hinterlegten Übertragungskonfigurationen sind, wie zuvor erwähnt, in den Fig. 2a bis 2d dargestellt.

In Fig. 3 ist nun zusätzlich ein Ausführungsbeispiel eines am Boden befindlichen Flugsicherungssystems mit einer stationären Sende- und Empfangseinrichtung 200 dargestellt. Die stationäre Sende- und Empfangseinrichtung 200 umfasst in Fig. 3 eine Boden-Multilink-Einheit GME, deren Ein- und Ausgänge mit einem ersten Netzwerk GM₁ und einem zweiten Netzwerk GM₂ verbunden sind. Die stationäre Sende- und Empfangseinrichtung 200 umfasst weiters eine am Boden befindliche stationäre Multilink-Management-Einheit MME', die mit einem weiteren Speicher 5' verbunden ist, in dem ein weiteres vorgegebenes Regelwerk R' mit einer Vielzahl von weiteren Übertragungskonfigurationen UC' für die Übertragung von Daten zwischen dem Flugsicherungssystem und einem Luftfahrzeug hinterlegt ist.

Das erste Netzwerk GN₁, das an Datenein- und -ausgänge 1', 2' der Boden-Multilink-Einheit GME angeschlossen ist bzw. mit diesen in Datenaustausch steht, steht auch mit einem Satelliten-Gateway SG und einem terrestrischen Gateway TG in Datenkommunikation, sodass vom Flugsicherungssystem erstellte Datenpakete über das erste Netzwerk GN₁ an das Satelliten-Gateway SG oder das terrestrische Gateway TG zur Übermittlung an das Luftfahrzeug übermittelt werden können.

Vom Satelliten-Gateway SG werden die zu übermittelnden Datenpakete an Satelliten S übermittelt, von wo aus die Datenpakete an die Satellitenantenne SA des Luftfahrzeugs übermittelt werden. Das terrestrische Gateway TG übermittelt zu übertragende Datenpakete an eine oder mehrere terrestrische Basisstationen TBS, die die zu übertragenden Datenpakete an die terrestrische Antenne TA des Luftfahrzeugs weiterleiten.

Zu übermittelnde Datenpakete ATS, die Flugfernmeldungen betreffen, oder Datenpakete AOC, die den operativen Betrieb des Luftfahrzeugs betreffen, die beispielsweise von Datenverarbeitungsanlagen der stationären Sende- und Empfangseinrichtung 200 des Flugsicherungssystems erstellt werden, werden über das zweite Netzwerk GN₂, an entsprechenden interne Datenein- und -ausgänge 3', 4' des Flugsicherungssystems zur späteren Weiterleitung an das Luftfahrzeug übermittelt.

In Fig. 3 sollen Datenpakete zwischen dem Luftfahrzeug und dem am Boden befindlichen Flugsicherungssystem übertragen werden. Wie bereits zuvor beschrieben, stehen dem Luftfahrzeug zwei Übertragungskanäle UCH, nämlich ein Satellitenfunkkanal SR und terrestrischer Funkkanal TR, zur Verfügung. Die Übertragungsqualität der einzelnen Übertragungskanäle UCH wird laufend gemessen und der Multilink-Management-Einheit MME des Luftfahrzeugs zur Verfügung gestellt.

Im Ausführungsbeispiel in Fig. 3 sollen Datenpakete ATS, die Flugfernmeldungen betreffen, an das Flugsicherungssystem übermittelt werden. Dazu werden vom Luftfahrzeug diesbezügliche Datenpakete für die Übertragung an das Flugsicherungssystem vorgegeben. Im Ausführungsbeispiel hebt das Luftfahrzeug zunächst vom Boden ab und bei der Messung der Übertragungsqualität der Übertragungskanäle UCH wird ermittelt, dass der terrestrische Funkkanal TR gute Übertragungsqualität H bereitstellt, während der Satellitenfunkkanal SR nicht verfügbar U ist.

Die Multilink Management Einheit MME wählt in diesem Fall die in Fig. 2b dargestellte Übertragungskonfiguration UC₄ mit der kennzeichnenden Kennung "4" aufgrund der ermittelten Übertragungsqualitäten aus den im Regelwerk R zur Verfügung stehenden Übertragungskonfigurationen UC. Gegebenenfalls können dabei die Art der zu übertragenden Daten, oder weiteren Vorgaben berücksichtigt werden. Dies bedeutet im konkreten Beispiel, dass alle Datenpakete über den terrestrischen Funkkanal TR und Ultrakurzwelle VHF übertragen werden.

Den gemäß der Übertragungskonfiguration UC₄ bzw. mittels der in der Übertragungskonfiguration UC₄ hinterlegten Übertragungskanäle UCH übermittelten Datenpaketen wird die kennzeichnende Kennung, in Fig. 2b ist dies die Indexnummer "4", der Übertragungskonfiguration UC₄ hinzugefügt und gemeinsam mit den Datenpaketen an das Flugsicherungssystem übertragen.

Um bei der Übertragung der kennzeichnenden Kennung Datenvolumen und Traffic einzusparen, kann die kennzeichnende Kennung vorteilhafterweise wie im Ausführungsbeispiel im Flow Label eines IPv6 Datenpakets piggyback, d.h. huckepack, übertragen werden. Somit brauchen keine eigenständigen Datenpakete mit der kennzeichnenden Kennung übermittelt werden, was vorteilhafterweise Datenvolumen und Datenverkehr einspart.

In der am Boden befindlichen Multilink-Management-Einheit MME' des Flugsicherungssystems bzw. im weiteren Speicher 5' ist ein zum Regelwerk des Luftfahrzeugs komplementäres weiters Regelwerk R' mit weiteren Übertragungskonfigurationen UC' hinterlegt. Anhand der kennzeichnenden Kennung für jede Übertragungskonfiguration UC des Luftfahrzeugs kann jeweils eine damit korrespondierende weitere Übertragungskonfiguration UC' der stationären Sende- und Empfangseinrichtung 200 des Flugsicherungssystems ermittelt werden, die eine Rückübermittlung von Datenpaketen vom Flugsicherungssystem über denselben Übertragungskanal UCH an das Luftfahrzeug ermöglicht, wie er benutzt wurde, um Datenpakete vom Luftfahrzeug an das Flugsicherungssystem zu übermitteln.

Im gezeigten Ausführungsbeispiel in Fig. 3 wird dazu die kennzeichnende Kennung "4" aus den übermittelten Datenpaketen extrahiert und die der Kennung zugeordnete weitere Übertragungskonfiguration UC'_{4'} für die Rückübermittlung von Datenpaketen an das Luftfahrzeug ausgewählt.

Findet z.B. zum Zeitpunkt der Änderung der Übertragungskonfiguration UC keine Übermittlung von Datenpaketen, mit denen die Kennung der neuen Übertragungskonfiguration UC wie im Ausführungsbeispiel "piggyback" bzw. "huckepack" übertragen werden kann, vom Luftfahrzeug an das Flugsicherungssystem statt, kann zur Aktualisierung, welche weitere Übertragungskonfiguration UC' vom Flugsicherungssystem zur Übertragung von Daten an das Luftfahrzeug verwendet werden soll, optional ein Dummy-Datenpaket vom Flugzeug an das Flugsicherungssystem übermittelt werden. In einem derartigen Dummy-Datenpaket ist die kennzeichnende Kennung der aktuellen Übertragungskonfiguration des Luftfahrzeugs enthalten, sodass das Flugssicherungssystem vorteilhafterweise stets informiert ist, welche Übertragungskonfiguration UC das Luftfahrzeug aktuell verwendet bzw. welche weitere Übertragungskonfiguration UC' für eine Datenübertragung an das Luftfahrzeug zu verwenden ist. Derartige Dummy-Datenpakete können beispielsweise von der Multilink-Management-Einheit MME erstellt und der On-Board-Multilink-Einheit OME zur Übermittlung an das Flugsicherungssystem bereitgestellt werden.

Bei der Messung der Übertragungsqualität der einzelnen Übertragungskanäle UCH wird im Ausführungsbeispiel in Fig. 3 nun festgestellt, dass nicht nur der terrestrische Funkkanal TR, sondern auch der Satellitenfunkkanal SR über gute Übertragungsqualität H verfügen. In diesem Fall wird von der Multilink-Management-Einheit MME des Luftfahrzeugs die Übertragungskonfiguration UC₁ mit der kennzeichnenden Kennung "1" ausgewählt. Dies bedeutet, dass z.B. Datenpakete ATS, die Flugfernmeldungen betreffen, über den terrestrischen Funkkanal TR über Ultrakurzwelle VHF übertragen werden. Datenpakete AOC, die die operative Kontrolle des Luftfahrzeugs betreffen, werden über den Satellitenfunkkanal SR übertragen, was durch den Hinweis "SAT" gekennzeichnet ist.

Während das Luftfahrzeug seinen Flug fortsetzt, überquert es einen Ozean und verliert den Funkkontakt zum Flugssicherungssystem über den terrestrischen Funkkanal TR. Dies bedeutet, dass der terrestrische Funkkanal TR nicht verfügbar U ist und nur der Satellitenfunkkanal SR gute Übertragungsqualität H aufweist. Die Multilink-Management-Einheit MME des Luftfahrzeugs wählt in diesem Fall die Übertragungskonfiguration UC₁₃ aus, die die kennzeichnende Kennung "13" aufweist. Dies bedeutet, dass nun alle zu übertragenden Datenpakete über den Satellitenfunkkanal SR übermittelt werden.

Im Zuge seines Flugs nähert sich das Luftfahrzeug nun einem Kontinent, wobei wieder ein Datenaustausch über den terrestrischen Funkkanal TR, jedoch mit schlechter Übertragungsqualität L, hergestellt werden kann. Die Verbindung über den Satellitenfunkkanal SR weist noch immer gute Übertragungsqualität H auf. In diesem Fall wählt die Multilink-Management-Einheit MME des Luftfahrzeugs die Übertragungskonfiguration UC₉ mit der kennzeichnenden Kennung "9" aus. Dies bedeutet, dass ACARS-Datenpakete über den terrestrischen Funkkanal TR über Ultrakurzwelle VHF übermittelt werden, und CPDLC-Datenpakete über den Satellitenfunkkanal SR übermittelt werden, was durch den Hinweis "SAT" gekennzeichnet ist. Alle anderen Datenübertragungen werden über Ultrakurzwelle, d.h. den terrestrischen Funkkanal TR über Ultrakurzwelle VHF, durchgeführt.

In allen beschriebenen Fällen kann die kennzeichnende Kennung "piggyback" in den jeweiligen Datenpaketen vom Luftfahrzeug an das Flugsicherungssystem übermittelt werden, und die am Boden befindliche, stationäre Multilink-Management-Einheit MME' des Flugsicherungssystems wählt aus dem weiteren Regelwerk R' die entsprechende weitere Übertragungskonfiguration UC' zur Übertragung von Datenpaketen an das Luftfahrzeug über denselben Übertragungskanal UCH aus.

Ein erfindungsgemäßes Verfahren zur Datenübertragung zwischen einem Fahrzeug und einem Verkehrssicherungssystem bzw. eine erfindungsgemäße Sende- und Empfangseinrichtung 100 und eine stationäre Sende- und Empfangseinrichtung 200 eines erfindungsgemäßen Datenübertragungssystems können jedoch nicht nur, wie zuvor beschrieben, in der Luftfahrt zum Einsatz kommen. Derartige Sende- und Empfangseinrichtungen 100, 200 eines erfindungsgemäßen Datenübertragungssystems können auch zur Datenübertragung zwischen einem beliebigen Fahrzeug, dem verschiedene Übertragungskanäle zur Datenübertragung an ein stationäres Verkehrssicherungssystem zur Verfügung stehen, und dem jeweiligen Verkehrssicherungssystem eingesetzt werden. Exemplarisch sei hier eine Datenübertragung zwischen einem Schiff und dem jeweiligen Schifffahrtssicherungssystem genannt.

## Patentansprüche

1. Verfahren zur Übertragung von Daten zwischen einem Fahrzeug und einem Verkehrssicherungssystem
- wobei eine Anzahl von möglichen Übertragungskanälen (UCH) zur Übertragung von Daten zwischen einem Fahrzeug und dem Verkehrssicherungssystem zur Verfügung stehen,
- wobei im Fahrzeug Datenpakete (ATS, AOC) für die Übertragung an das Verkehrssicherungssystem vorgegeben werden,
- wobei die Übertragungsqualität der einzelnen Übertragungskanäle (UCH) gemessen wird,
- wobei aus der Art der zu übermittelnden Daten und den ermittelten Übertragungsqualitäten, gemäß einem vorgegebenen Regelwerk (R), eine Übertragungskonfiguration (UC) aus einer Mehrzahl von vorab vorgegebenen Übertragungskonfigurationen (UC₁, ..., UC₁₆) ausgewählt wird,
**dadurch gekennzeichnet,**
- **dass** die Übertragungskonfiguration (UC) für einzelne einem Dienst zugeordnete Datenpakete (ATS, AOC) bestimmte Übertragungskanäle (UCH) vorgibt,
- **dass** den Datenpaketen (ATS, AOC) eine die Übertragungskonfiguration (UC) kennzeichnende Kennung hinzugefügt wird,
- **dass** die im Fahrzeug für die Übertragung vorgegebenen Datenpakete (ATS, AOC) entsprechend der Übertragungskonfiguration (UC) gemeinsam mit der Kennung an das Verkehrssicherungssystem übertragen werden,
- **dass** zur anschließenden Datenübertragung zwischen dem Verkehrssicherungssystem und dem Fahrzeug, Datenpakete (ATS', AOC') vorgegeben werden,
- **dass** für jede der Übertragungskonfigurationen (UC₁, ..., UC₁₆) im Fahrzeug jeweils eine weitere Übertragungskonfiguration (UC'₁, ..., UC'₁₆), zur Verfügung steht, die eine Rückübermittlung über denselben Übertragungskanal (UCH) ermöglicht,
- **dass** aus dem vom Fahrzeug übermittelten Datenpaket (ATS, AOC) die Kennung identifiziert wird und die der Kennung zugeordnete weitere Übertragungskonfiguration (UC') gewählt wird, und
- **dass** die vorgegebenen Datenpakete (ATS', AOC') entsprechend der gewählten weiteren Übertragungskonfiguration (UC') vom Verkehrssicherungssystem an das Fahrzeug übertragen werden.

2. Verfahren nach Anspruch 1, **dadurch gekennzeichnet, dass** zur Aktualisierung der vom Verkehrssicherungssystem für eine Datenübertragung an das Fahrzeug zu verwendenden weiteren Übertragungskonfiguration (UC') die kennzeichnende Kennung enthaltende Dummy-Datenpakete vom Fahrzeug an das Verkehrssicherungssystem übermittelt werden.

3. Datenübertragungssystem zur Übertragung von Daten zwischen einem Fahrzeug und einem Verkehrssicherungssystem umfassend
a) eine Sende- und Empfangseinrichtung (100) zur Verwendung in einem Fahrzeug umfassend
- eine Anzahl von Übertragungseinheiten für die Übertragung von Daten über Übertragungskanäle (UCH) zwischen dem Fahrzeug und einem Verkehrssicherungssystem,
- zumindest eine Datenverarbeitungsanlage zur Erstellung von Datenpaketen (ATS, AOC) für die Übertragung an das Verkehrssicherungssystem sowie zur Verarbeitung von an das Fahrzeug übertragenen Datenpaketen,
- eine an die Übertragungskanäle (UCH) angekoppelte und mit der zumindest einen Datenverarbeitungsanlage verbundene On-Board-Multilink-Einheit (OME), die dazu ausgebildet ist, zu übertragende Datenpakete (ATS, AOC) an die Übertragungskanäle (UCH) weiterzuleiten und/oder empfangene Datenpakete (ATS', AOC') von den Übertragungskanälen (UCH) zu erhalten, und
- eine mit der On-Board-Multilink-Einheit (OME) verbundene Multilink-Management-Einheit (MME) umfassend einen Speicher (5),
wobei im Speicher (5) der Multilink-Management-Einheit (MME) ein vorgegebenes Regelwerk (R) mit einer Mehrzahl an Übertragungskonfigurationen (UC₁, ..., UC₁₆) zur Weiterleitung von zu übertragenden Datenpaketen (ATS, AOC) hinterlegt ist, und
wobei die Multilink-Management-Einheit (MME) dazu ausgebildet ist
- die Übertragungsqualität, die für die Datenübertragung in den einzelnen Übertragungskanälen (UCH) zur Verfügung steht, zu messen, und
- aus der Art der zu übermittelnden Daten und den ermittelten Übertragungsqualitäten eine Übertragungskonfiguration (UC) auszuwählen,
und
b) eine stationäre Sende- und Empfangseinrichtung (200) zur Verwendung in einem Verkehrssicherungssystem umfassend
- eine Anzahl von Übertragungseinheiten zur Übertragung von Daten in den Übertragungskanälen (UCH) zwischen dem Verkehrssicherungssystem und einem Fahrzeug
- zumindest eine Datenverarbeitungsanlage zur Erstellung von weiteren Datenpaketen (ATS', AOC') für die Übertragung an das Fahrzeug sowie zur Verarbeitung von an das Verkehrssicherungssystem übertragenen Datenpaketen, und
- eine an die Übertragungskanäle (UCH) angekoppelte und mit der zumindest einen Datenverarbeitungsanlage verbundene Boden-Multilink-Einheit (GME), die dazu ausgebildet ist, zu übertragende weitere Datenpakete (ATS', AOC') über die Übertragungskanäle (UCH) weiterzuleiten und/oder empfangene Datenpakete (ATS', AOC') über die Übertragungskanäle (UCH) zu erhalten,
**dadurch gekennzeichnet,**
**dass** die Multilink-Management-Einheit (MME) dazu ausgebildet ist
- entsprechend der jeweils ausgewählten Übertragungskonfiguration (UC) für einzelne einem Dienst zugeordnete Datenpakete (ATS, AOC) bestimmte Übertragungskanäle (UCH) vorzugeben und den Datenpaketen (ATS, AOC) eine die Übertragungskonfiguration (UC) kennzeichnende Kennung hinzuzufügen und
- die On-Board-Multilink-Einheit (OME) zur Übertragung der Datenpakete (ATS, AOC) an das Flugsicherungssystem gemeinsam mit der Kennung über die entsprechend der Übertragungskonfiguration (UC) vorgegebenen Übertragungskanäle (UCH) anzusteuern, und
**dass** die stationäre Sende- und Empfangseinrichtung (200) eine mit der Boden-Multilink-Einheit (GME) verbundene stationäre Multilink-Management-Einheit (MME') umfassend einen weiteren Speicher (5') umfasst,
wobei im weiteren Speicher (5') ein weiteres vorgegebenes Regelwerk (R') mit einer Mehrzahl an weiteren Übertragungskonfigurationen (UC'₁, ..., UC'₁₆) zur Weiterleitung von zu übertragenden weiteren Datenpaketen (ATS', AOC') hinterlegt ist, wobei für jede der Übertragungskonfigurationen (UC₁, ..., UC₁₆) der Sende- und Empfangseinrichtung (100) jeweils eine weitere Übertragungskonfiguration (UC'₁, ..., UC'₁₆) im weiteren Speicher (5') zur Verfügung steht, die eine Rückübermittlung über denselben Übertragungskanal (UCH) ermöglicht, und
wobei die stationäre Multilink-Management-Einheit (MME') dazu ausgebildet ist
- aus einem an das Verkehrssicherungssystem übermittelten Datenpaket (ATS, AOC) die Kennung zu identifizierten und die der Kennung zugeordnete weitere Übertragungskonfiguration (UC') auszuwählen,
- entsprechend der jeweils ausgewählten weiteren Übertragungskonfiguration (UC') bestimmte Übertragungskanäle (UCH) vorzugeben und
- die Boden-Multilink-Einheit (GME) zur Übertragung der weiteren Datenpakete (ATS', AOC') an das Fahrzeug über die entsprechend der weiteren Übertragungskonfiguration (UC') vorgegebenen Übertragungskanäle (UCH) anzusteuern.

4. Datenübertragungssystem nach Anspruch 3, **dadurch gekennzeichnet, dass** die Multilink-Management-Einheit (MME) dazu ausgebildet ist, zur Aktualisierung einer für eine Datenübertragung an das Fahrzeug zu verwendenden weiteren Übertragungskonfiguration (UC') die kennzeichnende Kennung enthaltende Dummy-Datenpakete zu erstellen und die On-Board-Multilink-Einheit (OME) anzusteuern, diese Dummy-Datenpakete zu übermitteln.

## Claims

1. Method for transmitting data between a vehicle and a traffic security system
- wherein a number of possible transmission channels (UCH) are available for transmitting data between a vehicle and the traffic security system,
- wherein data packets (ATS, AOC) are specified in the vehicle for the transmission to the traffic security system,
- wherein the transmission quality of the individual transmission channels (UCH) is measured,
- wherein a transmission configuration (UC) is selected from a plurality of previously specified transmission configurations (UC₁, ..., UC₁₆) from the type of data to be transmitted and the ascertained transmission qualities, according to a specified set of rules (R),
**characterised in that**
- the transmission configuration (UC) specifies particular transmission channels (UCH) for individual data packets (ATS, AOC) associated with a service,
- an identifier characterising the transmission configuration (UC) is added to the data packets (ATS, AOC),
- the data packets (ATS, AOC) specified in the vehicle for transmission are transmitted to the traffic security system together with the identifier in accordance with the transmission configuration (UC),
- data packets (ATS', AOC') are specified for the subsequent data transmission between the traffic security system and the vehicle,
- for each of the transmission configurations (UC₁, ..., UC₁₆) in the vehicle, an additional transmission configuration (UC'₁, ..., UC'₁₆) is available which enables return transmission over the same transmission channel (UCH),
- the identifier is identified from the data packet (ATS, AOC) transmitted by the vehicle and the additional transmission configuration (UC') is selected which is associated with the identifier, and
- the specified data packets (ATS', AOC') are transmitted from the traffic security system to the vehicle in accordance with the selected additional transmission configuration (UC').

2. Method according to claim 1, **characterised in that** dummy data packets containing the characterising identifier are transmitted from the vehicle to the traffic security system in order to update the additional transmission configuration (UC') to be used by the traffic security system for data transmission to the vehicle.

3. Data transmission system for transmitting data between a vehicle and a traffic security system, comprising
a) a transmission and reception apparatus (100) for use in a vehicle, comprising
- a number of transmission units for transmitting data over transmission channels (UCH) between the vehicle and a traffic security system,
- at least one data processing system for creating data packets (ATS, AOC) for transmission to the traffic security system and for processing data packets transmitted to the vehicle,
- an on-board multilink unit (OME) coupled to the transmission channels (UCH) and connected to the at least one data processing system, which on-board multilink unit is designed to route data packets (ATS, AOC) to be transmitted to the transmission channels (UCH) and/or to obtain received data packets (ATS', AOC') from the transmission channels (UCH), and
- a multilink management unit (MME) connected to the on-board multilink unit (OME) and comprising a memory (5),
wherein a specified set of rules (R) with a plurality of transmission configurations (_{UC1}, ...,_{UC16}) for routing data packets (ATS, AOC) to be transmitted is stored in the memory (5) of the multilink management unit (MME), and
wherein the multilink management unit (MME) is designed
- to measure the transmission quality available for data transmission in the individual transmission channels (UCH), and
- to select a transmission configuration (UC) from the type of data to be transmitted and the ascertained transmission qualities, and
b) a stationary transmission and reception apparatus (200) for use in a traffic security system, comprising
- a number of transmission units for transmitting data in the transmission channels (UCH) between the traffic security system and a vehicle,
- at least one data processing system for creating additional data packets (ATS', AOC) for transmission to the vehicle and for processing data packets transmitted to the traffic security system, and
- a ground multilink unit (GME) coupled to the transmission channels (UCH) and connected to the at least one data processing system, and designed to route additional data packets (ATS', AOC) to be transmitted over the transmission channels (UCH) and/or to obtain received data packets (ATS', AOC) over the transmission channels (UCH),
**characterised in that**
the multilink management unit (MME) is designed
- to specify particular transmission channels (UCH) for individual data packets (ATS, AOC) associated with a service in accordance with the selected transmission configuration (UC) and to add an identifier characterising the transmission configuration (UC) to the data packets (ATS, AOC), and
- to actuate the on-board multilink unit (OME) in order to transmit the data packets (ATS, AOC) to the air traffic control system together with the identifier over the transmission channels (UCH) specified in accordance with the transmission configuration (UC), and
**in that** the stationary transmission and reception apparatus (200) comprises a stationary multilink management unit (MME') connected to the ground multilink unit (GME) and comprising a further memory (5'),
wherein an additional specified set of rules (R') with a plurality of additional transmission configurations (UC'₁, ..., UC'₁₆) for routing additional data packets (ATS', AOC') to be transmitted is stored in the additional memory (5'), wherein for each of the transmission configurations (_{UC1}, ..., _{UC16}) of the transmission and reception apparatus (100), a respective additional transmission configuration (UC'₁, ..., UC'₁₆) is available in the additional memory (5'), which additional transmission configuration enables return transmission over the same transmission channel (UCH), and
wherein the stationary multilink management unit (MME) is designed
- to identify the identifier from a data packet (ATS, AOC) transmitted to the traffic security system and to select the additional transmission configuration (UC') associated with the identifier,
- to specify particular transmission channels (UCH) in accordance with the respectively selected additional transmission configuration (UC') and
- to actuate the ground multilink unit (GME) in order to transmit the additional data packets (ATS', AOC') to the vehicle over the transmission channels (UCH) specified in accordance with the additional transmission configuration (UC').

4. Data transmission system according to claim 3, **characterised in that** the multilink management unit (MME) is designed to create dummy data packets containing the characterising identifier in order to update an additional transmission configuration (UC') to be used for data transmission to the vehicle and to actuate the on-board multilink unit (OME) to transmit these dummy data packets.

## Revendications

1. Procédé de transmission de données entre un véhicule et un système de sécurité de circulation
- dans lequel un certain nombre de canaux de transmission (UCH) possibles sont disponibles pour la transmission de données entre un véhicule et le système de sécurité de circulation,
- dans lequel des paquets de données (ATS, AOC) sont prédéfinis dans le véhicule pour la transmission au système de sécurité de circulation,
- dans lequel la qualité de transmission des canaux de transmission (UCH) individuels est mesurée,
- dans lequel à partir du type de données à transmettre et des qualités de transmission déterminées, selon un ensemble de règles (R) prédéfini, une configuration de transmission (UC) est choisie à partir d'une pluralité de configurations de transmission (UC₁, ..., UC₁₆) prédéfinies au préalable,
**caractérisé en ce que**
- la configuration de transmission (UC) définit certains canaux de transmission (UCH) pour des paquets de données (ATS, AOC) individuels associées à un service,
- un identifiant caractérisant la configuration de transmission (UC) peut être ajouté aux paquets de données (ATS, AOC),
- les paquets de données (ATS, AOC) prédéfinis pour la transmission dans le véhicule correspondant à la configuration de transmission (UC) sont transmis conjointement avec l'identifiant au système de sécurité de circulation,
- pour la transmission de données ultérieure entre le système de sécurité de circulation et le véhicule, des paquets de données (ATS', AOC') sont prédéfinis,
- pour chacune des configurations de transmission (UC₁, ..., UC₁₆) dans le véhicule respectivement une autre configuration de transmission (UC'₁, ..., UC'₁₆) est disponible, qui permet une transmission de retour par le biais du même canal de transmission (UCH),
- l'identifiant est identifié à partir du paquet de données (ATS, AOC) transmis par le véhicule et l'autre configuration de transmission (UC') associée à l'identifiant est choisie, et
- les paquets de données (ATS, AOC) prédéfinis correspondant à l'autre configuration de transmission (UC) choisie sont transmis par le système de sécurité de circulation au véhicule.

2. Procédé selon la revendication 1, **caractérisé en ce que** pour la mise à jour de l'autre configuration de transmission (UC') à utiliser par le système de sécurité de circulation pour une transmission de données au véhicule, les paquets de données factices contenant l'identifiant caractéristique sont transmis par le véhicule au système de sécurité de circulation.

3. Système de transmission de données pour transmettre des données entre un véhicule et un système de sécurité de circulation comprenant
a) un dispositif d'émission et de réception (100) pour l'utilisation dans un véhicule comprenant
- un certain nombre d'unités de transmission pour la transmission de données par le biais de canaux de transmission (UCH) entre le véhicule et un système de sécurité de circulation,
- au moins un système de traitement de données destiné à la création de paquets de données (ATS', AOC) pour la transmission au système de sécurité de circulation, ainsi que pour le traitement de paquets de données transmis au véhicule,
- une unité Multilink embarquée (OME) couplée aux canaux de transmission (UCH) et reliée à le au moins un système de traitement de données, qui est conçue pour transmettre des paquets de données (ATS, AOC) à transmettre aux canaux de transmission (UCH) et/ou pour obtenir des paquets de données (ATS', AOC') reçus par les canaux de transmission (UCH), et
- une unité de gestion Multilink (MME) reliée à l'unité Multilink embarquée (OME) comprenant une mémoire (5),
dans lequel dans la mémoire (5) de l'unité de gestion Multilink (MME) un ensemble de règles (R) prédéfini est enregistré avec une pluralité de configurations de transmission (UC₁, ..., UC₁₆) pour la transmission de paquets de données (ATS, AOC) à transmettre, et
dans lequel l'unité de gestion Multilink (MME) est conçue pour
- mesurer la qualité de transmission, qui est disponible pour la transmission de données dans les canaux de transmission (UCH) individuels, et
- choisir une configuration de transmission (UC) à partir du type de données à transmettre et des qualités de transmission déterminées, et
b) un dispositif d'émission et de réception (200) fixe pour l'utilisation dans un système de sécurité de circulation comprenant
- un certain nombre d'unités de transmission pour la transmission de données dans les canaux de transmission (UCH) entre le système de sécurité de circulation et un véhicule
- au moins un système de traitement de données destiné à la création d'autres paquets de données (ATS', AOC) pour la transmission au véhicule, ainsi que pour le traitement de paquets de données transmis au système de sécurité de circulation, et
- une unité Multilink au sol (GME) couplée aux canaux de transmission (UCH) et reliée à le au moins un système de traitement de données, qui est conçue pour transmettre des autres paquets de données (ATS', AOC) à transmettre par le biais des canaux de transmission (UCH) et/ou obtenir des paquets de données (ATS', AOC) reçus par le biais des canaux de transmission (UCH),
**caractérisé en ce que**
l'unité de gestion Multilink (MME) est conçue pour
- définir certains canaux de transmission (UCH) pour des paquets de données (ATS, AOC) individuels associés à un service correspondant à la configuration de transmission (UC) respective choisie et ajouter un identifiant caractérisant la configuration de transmission (UC) aux paquets de données (ATS, AOC) et
- commander l'unité Multilink embarquée (OME) pour la transmission des paquets de données (ATS, AOC) au système de sécurité aérien conjointement avec l'identifiant par le biais des canaux de transmission (UCH) prédéfinis correspondant à la configuration de transmission (UC), et
**en ce que** le dispositif d'émission et de réception (200) fixe comprend une unité de gestion Multilink (MME') fixe reliée à l'unité Multilink au sol (GME) comprenant une autre mémoire (5'),
dans lequel dans l'autre mémoire (5') un autre ensemble de règles (R') prédéfini est enregistré avec une pluralité d'autres configurations de transmission (UC'₁, ..., UC'₁₆)pour la transmission d'autres paquets de données (ATS', AOC') à transmettre, dans lequel pour chacune des configurations de transmission (UC₁, ..., UC₁₆) du dispositif d'émission et de réception (100) respectivement une autre configuration de transmission (UC'₁, ..., UC'₁₆) est disponible dans l'autre mémoire (5'), qui permet une transmission de retour par le biais du même canal de transmission (UCH), et
dans lequel l'unité de gestion Multilink (MME') fixe est conçue pour
- identifier l'identifiant à partir d'un paquet de données (ATS, AOC) transmis au système de sécurité de circulation et choisir l'autre configuration de transmission (UC') associée à l'identifiant,
- définir certains canaux de transmission (UCH) correspondant à l'autre configuration de transmission (UC') respective choisie et
- commander l'unité Multilink au sol (GME) pour la transmission des autres paquets de données (ATS', AOC') au véhicule par le biais des canaux de transmission (UCH) prédéfinis correspondant à l'autre configuration de transmission (UC').

4. Système de transmission de données selon la revendication 3, **caractérisé en ce que** l'unité de gestion Multilink (MME) est conçue pour créer des paquets de données factices contenant l'identifiant caractéristique pour la mise à jour d'une autre configuration de transmission (UC') à utiliser pour une transmission de données au véhicule et commander l'unité Multilink embarquée (OME), transmettre lesdits paquets de données factices.
